# EUROPÄISCHE PATENTSCHRIFT

(11) **EP 3 460 010 B1**
(45) Veröffentlichungstag und Bekanntmachung des Hinweises auf die Patenterteilung: **07.02.2024**
(21) Anmeldenummer: 18170133.5
(22) Anmeldetag: 30.04.2018
(51) Int. Cl.: C09D 5/02, C09D 7/61, C09D 7/63

(54) **LAGERSTABILE BESCHICHTUNGSZUSAMMENSETZUNG**
STORAGE-STABLE COATING COMPOSITION
COMPOSITION DE REVÊTEMENT STABLE AU STOCKAGE

(30) Priorität: 26.09.2017 DE 102017008987
(43) Veröffentlichungstag der Anmeldung: 27.03.2019
(73) Patentinhaber: STO SE & Co. KGaA, 79780 Stühlingen (DE)
(72) Erfinder: Van Leeuwen, Jack, 4800 Zofingen (CH); Bartmann, Kerstin, 79848 Bonndorf (DE); Troll, Michael, 79848 Bonndorf-Dillendorf (DE); Burgeth, Gerald, 91322 Gräfenberg (DE)
(74) Vertreter: Gottschalk, Matthias

(56) Entgegenhaltungen:
- EP-A2- 1 457 529
- WO-A1-2005/111158
- WO-A1-2009/130238
- WO-A1-2017/054156
- DE-A1-102004 010 155
- Anonymous: "2-AMINO-2-METHYL-1-PROPANOL SOLUTION", , 1 May 2015 (2015-05-01), XP055728825, Retrieved from the Internet: URL:https://www.angus.com/literature/downl oaddoc?fileName=ANGUS_AMP_TDS.pdf&contentT ype=Technical%20Data%20Sheet&parentFolder= Literature [retrieved on 2020-09-08]

## Beschreibung

Die Erfindung betrifft lagerstabile Zusammensetzungen zur Ausbildung von Beschichtungen an Bauwerken, umfassend wenigstens ein organisches Bindemittel, wenigstens einen Füllstoff und/oder Pigment, Wasser zur Einstellung einer pastösen Konsistenz der Zusammensetzung, ein Puffersystem zur Einstellung und Aufrechterhaltung eines pH-Wertes von mindestens 10, sowie ggf. übliche Additive.

Solche Zusammensetzungen müssen zwischen ihrer Herstellung und ihrer Verwendung oft lange Lagerzeiten von Wochen oder Monaten überdauern, während derer sie sich nicht relevant verändern dürfen. Wegen des Gehalts an organischen Bindemitteln in wässrigem Medium besteht die Gefahr, dass die Zusammensetzungen von Mikroben befallen werden, die sich von dem Bindemittel und anderen organischen Zusätzen ernähren. Das kann zur Unbrauchbarkeit der befallenen Zusammensetzung führen und muss daher wirksam verhindert werden.

Es ist daher bereits bekannt, solche Zusammensetzungen zu konservieren und gegen mikrobiellen Befall zu schützen.

Dabei kommt der Einsatz herkömmlicher Konservierungsstoffe generell nicht in Betracht, weil diese zunehmend rechtlichen Einschränkungen unterliegen.

Es ist daher bereits vorgeschlagen worden, lagerstabile Zusammensetzungen der hier betrachteten Art ohne Gehalt an herkömmlichen Konservierungsstoffen zu schaffen, indem der pH-Wert der Zusammensetzung so erhöht wird, dass der mikrobielle Befall wirksam verhindert wird. Angestrebt wird dabei ein pH-Wert von wenigstens 10, da bei niedrigeren pH-Werten der mikrobielle Befall nicht mit ausreichender Sicherheit verhindert werden kann.

So erfolgt im Stand der Technik die pH-Wert - Erhöhung durch Zugabe von Wasserglas, zum Beispiel gemäß EP1297079.

Alternativ offenbaren die DE102014013455A1 und die WO2017144694A1 die Verwendung von Siliconaten als pH-Wert erhöhendes Additiv.

Es ist keine triviale Aufgabe, ein funktionsfähiges und wirtschaftlich brauchbares System zur Erhöhung des pH-Werts in solchen Zusammensetzungen zu finden.

Die Erhöhung des pH-Werts beispielsweise durch Zugabe von Lauge wie NaOH oder KOH genügt nicht. Der pH-Wert fällt dann innerhalb weniger Tage oder Wochen wieder, so dass der Befallsschutz nachlässt. Man benötigt einen Puffer mit ausreichender Pufferkapazität. Wasserglas ist aufgrund seiner -O-Si(OH)ₓ - Gruppen, x = 1 - 3, ein geeigneter Puffer mit großer Pufferkapazität im hochalkalischen Bereich. Ähnliches gilt für das Siliconat - System.

Es besteht ein Bedürfnis für neuartige Systeme zur ausreichenden und dauerhaften Erhöhung des pH-Wertes bei erfindungsgemäßen Zusammensetzungen.

Solche Systeme müssen ausreichend hohe pH-Werte in den Zusammensetzungen über ausreichende Zeiträume bereitstellen. Sie müssen mit den weiteren Bestandteilen der Zusammensetzungen kompatibel sein und dürfen deren Brauchbarkeit nicht beeinträchtigen. Sie müssen den gesetzlichen Vorschriften entsprechen und sollen möglichst einfach und kostengünstig beschaffbar und einsetzbar sein.

Aus WO 2005/111158 A1 bzw. EP 1 457 529 sind Puffersysteme bekannt, die Glycin bzw. 2-Amino-2-methylpropanol enthalten, jedoch pKa-Werte von nur 9,6 bzw. 9,8 aufweisen.

Zur Lösung dieser Aufgaben dient erfindungsgemäß die Merkmalskombination des beigefügten unabhängigen Patentanspruchs 1.

Vorteilhafte Ausgestaltungen der Erfindung sind in den beigefügten abhängigen Ansprüchen definiert.

Erfindungsgemäß umfasst eine lagerstabile Zusammensetzung zur Ausbildung von Beschichtungen an Bauwerken und dgl. mit wenigstens einem organischen Bindemittel, wenigstens einem Füllstoff und/oder Pigment, Wasser zur Einstellung einer pastösen Konsistenz der Zusammensetzung, einem Puffersystem zur Einstellung und Aufrechterhaltung eines pH-Wertes von mindestens 10, sowie ggf. üblichen Additiven, daher einen Gehalt eines Puffersystems auf Basis wenigstens einer organischen Aminoverbindung, wobei der Gehalt zwischen 0,01 Gew.% und 20 Gew.% Aminoverbindung jeweils bezogen auf das Gesamtgewicht der Zusammensetzung entspricht, wobei wenigstens ein pKs-Wert der Säure des Puffersystems zwischen 10 und 13,5 liegt.

Vorzugsweise ist der Gehalt so bemessen, dass er zur Einstellung und Aufrechterhaltung eines pH-Wertes von wenigstens 10 der Zusammensetzung über wenigstens 30 Tage, vorzugsweise 60 Tage, mehr bevorzugt 90 Tage, noch mehr bevorzugt 180 Tage, speziell bevorzugt 360 Tage und noch spezieller bevorzugt 720 Tage ausreicht.

Spezieller liegt der Gehalt an Aminoverbindung zwischen 0,1 Gew.% und 15 Gew.%, vorzugsweise zwischen 0,2 Gew.% und 10 Gew.%.

In bevorzugten Ausführungsformen der Erfindung umfasst das Puffersystem wenigstens eine ampholytische organische Aminoverbindung, vorzugsweise ausgewählt aus der Gruppe, die Aminosäuren, Aminophenole, Aminoalkohole und Aminozucker umfasst. Mehr bevorzugt umfasst ein solches Puffersystem eine Aminoverbindung, die aus Arginin, Prolin, Lysin, p-Aminophenol und Glucosamin sowie Mischungen davon ausgewählt ist. Diese Aminoverbindungen sind aufgrund ihrer pKₛ - Werte besonders geeignet, erfindungsgemäße Puffer-Systeme herzustellen. Mindestens ein pKₛ - Wert der Aminoverbindung liegt zwischen 10 und 13,5, bevorzugt zwischen 10 und 13. Der pH-Wert, in dem sie ihre Pufferwirkung haben, ergibt sich aus ihren pKₛ - Werten. Ein Puffer hat die größte Wirkung nach der Henderson-Hasselbach-Gleichung am pH-Wert ~ pKₛ - Wert. Dort liegen die protonierte und die deprotonierte Form in ungefähr gleichen Mengen vor. Die entsprechenden Werte sind für die Aminosäuren Arginin (pKₛ = 12,1), Prolin (pKₛ = 10,6), Lysin (pKₛ = 10,3), für p-Aminophenol (pKₛ = 10,3) und für Glucosamin (oder Aminoglucose) (pKₛ zwischen 12 und 13).

Der pH-Wert solcher Puffersysteme liegt bevorzugt zwischen 10 und 14, mehr bevorzugt zwischen 10 und 13.

Wie auch in den Wasserglas-haltigen Systemen beruht die konservierende Wirkung v.a. auf der Erhöhung des pH-Werts durch das Puffersystem.

Die erfindungsgemäße Zusammensetzung, das Puffer-System enthaltend, hat vorzugsweise einen pH-Wert von mindestens 10,5, mehr bevorzugt mindestens 11, noch mehr bevorzugt zwischen 11 und 14, besonders bevorzugt von oberhalb 11 bis zu 12 über wenigstens 30 Tage, mehr bevorzugt wenigstens 60 Tage, mehr bevorzugt 90 Tage, noch mehr bevorzugt 180 Tage, speziell bevorzugt 360 Tage noch spezieller bevorzugt 720 Tage. Ein pH-Wert oberhalb von 11 gewährleistet besonders zuverlässig die Konservierung der Zusammensetzung. Ein pH-Wert von nicht mehr als 12 gewährt eine größere Sicherheit vor Verätzungen bei Herstellung und Handhabung des Produkts.

Die Zusammensetzung gilt als lagerstabil im Sinne der Erfindung, wenn sich ihr pH-Wert bei Lagerung unter Normalbedingungen über wenigstens 30 Tage um nicht mehr als 1 ändert.

Die Zusammensetzung enthält weiterhin wenigstens ein organisches Bindemittel in Form eines Polymer-Bindemittel bzw. Polymerdispersion.

Der Gehalt an wenigstens einem organischen Bindemittel liegt bevorzugt zwischen 1 Gew.% und 40 Gew.%, mehr vorzugsweise zwischen 2 Gew.% und 30 Gew.%, besonders bevorzugt zwischen 2,5 Gew.% und 25 Gew.%, jeweils berechnet als Feststoff.

Das organische Bindemittel ist in bevorzugten Ausführungsformen der Erfindung ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen umfasst, wobei Homopolymere oder Copolymere von Acrylsäure und/oder Methacrylsäure bevorzugt sind.

Bevorzugt sind allgemein wässrige Polymerdispersionen, die ausreichend verseifungsstabil sind.

Die erfindungsgemäßen Zusammensetzungen enthalten weiterhin Füllstoffe und/oder Pigmente.

Sie haben vorzugsweise einen Gehalt an (wenigstens einem) Füllstoff und/oder Pigment zwischen 10 Gew.% und 90 Gew.%, mehr vorzugsweise zwischen 20 Gew.% und 85 Gew,%, und besonders bevorzugt zwischen 25 Gew.% und 80 Gew.%.

In bevorzugten Ausführungsformen der Erfindung ist der wenigstens eine Füllstoff bzw. das wenigstens eine Pigment ausgewählt aus der Gruppe, die pyrogen gefällte Kieselsäure, gefällte Kieselsäure, Silizium-Aluminium-Mischoxide, Carbonate, z.B. Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst, wobei Titandioxid, Silikate und Carbonate besonders bevorzugt sind. Bei Pigmenten und Farbstoffen ist darauf zu achten, dass sie ausreichende Basenstabilität mitbringen.

Die erfindungsgemäßen Zusammensetzungen sind wässrig - pastös, also keine Trockenmischungen. Sie haben vorzugsweise einen Wassergehalt zwischen 5 Gew.% und 40 Gew.%., bezogen auf das Gesamtgewicht der Zusammensetzung.

In bevorzugten Ausführungsformen der Erfindung haben die Zusammensetzungen einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

Vorzugsweise enthält eine verarbeitungsfertige erfindungsgemäße Beschichtungszusammensetzung daher:

| | | |
|---|---|---|
| 1 - 40 Gew.% | org. Bindemittel (gerechnet als Feststoff) | bvzgt. 2 - 30 Gew%, bvzgter 2,5 - 25 Gew% |
| 10 - 90 Gew.% | Füllstoffe / Pigmente | bvzgt. 20 - 85 Gew%, bvzgter 25 - 80 Gew% |
| 0,01 - 20 Gew.% | Aminopuffer | bvzgt. 0,1 - 15 Gew%, bvzgter 0,2 - 10 Gew% |
| 0,1 - 10 Gew.% | Additive wie beschrieben | bvzgt. 0,2 - 8 Gew%, bvzgter 0,5 - 6 Gew% |
| 5 - 40 Gew.% | Wasser | |

## Patentansprüche

1. Lagerstabile Zusammensetzung zur Ausbildung von Beschichtungen an Bauwerken,
umfassend wenigstens ein organisches Bindemittel, wenigstens einen Füllstoff und/oder Pigment, Wasser zur Einstellung einer pastösen Konsistenz der Zusammensetzung, ein Puffersystem zur Einstellung und Aufrechterhaltung eines pH-Wertes von mindestens 10, sowie ggf. übliche Additive,
**gekennzeichnet durch** einen Gehalt eines Puffersystems auf Basis wenigstens einer organischen Aminoverbindung, wobei der Gehalt zwischen 0,01 Gew.% und 20 Gew.% Aminoverbindung jeweils bezogen auf das Gesamtgewicht der Zusammensetzung entspricht, wobei wenigstens ein pKs-Wert der Säure des Puffersystems zwischen 10 und 13,5 liegt.

2. Zusammensetzung nach Anspruch 1, bei welcher der Gehalt so bemessen ist, dass er zur Einstellung und Aufrechterhaltung eines pH-Wertes von wenigstens 10 der Zusammensetzung über wenigstens 30 Tage, vorzugsweise 60 Tage, mehr bevorzugt 90 Tage, noch mehr bevorzugt 180 Tage, speziell bevorzugt 360 Tage und noch spezieller bevorzugt 720 Tage ausreicht.

3. Zusammensetzung nach Anspruch 1 oder 2,
**dadurch gekennzeichnet, dass** der Gehalt an Aminoverbindung zwischen 0,1 Gew.% und 15 Gew.%, vorzugsweise zwischen 0,2 Gew.% und 10 Gew.% liegt.

4. Zusammensetzung nach einem der Ansprüche 1 bis 3,
**dadurch gekennzeichnet, dass** das Puffersystem wenigstens eine ampholytische organische Aminoverbindung, vorzugsweise ausgewählt aus der Gruppe, die Aminosäuren, Aminophenole, Aminoalkohole und Aminozucker umfasst, enthält.

5. Zusammensetzung nach Anspruch 4,
**dadurch gekennzeichnet, dass** das Puffersystem eine Aminoverbindung umfasst, die aus Arginin, Prolin, Lysin, p-Aminophenol und Glucosamin sowie Mischungen davon ausgewählt ist.

6. Zusammensetzung nach einem der vorstehenden Ansprüche,
**gekennzeichnet durch** einen pH-Wert von mindestens 10,5, vorzugsweise mindestens 11, besonders bevorzugt zwischen 12 und 14, über wenigstens 30 Tage, vorzugsweise wenigstens 60 Tage.

7. Zusammensetzung nach einem der vorstehenden Ansprüche,
**gekennzeichnet durch** einen Gehalt an wenigstens einem organischen Bindemittel zwischen 1 Gew.% und 40 Gew.%, vorzugsweise zwischen 2 Gew.% und 30 Gew,%, besonders bevorzugt zwischen 2,5 Gew.% und 25 Gew.%, jeweils berechnet als Feststoff.

8. Zusammensetzung nach einem der vorstehenden Ansprüche,
**gekennzeichnet durch** einen Gehalt an wenigstens einem Füllstoff und/oder Pigment zwischen 10 Gew.% und 90 Gew.%, vorzugsweise zwischen 20 Gew.% und 85 Gew.%, besonders bevorzugt zwischen 25 Gew.% und 80 Gew.%.

9. Zusammensetzung nach einem der vorstehenden Ansprüche,
**gekennzeichnet durch** einen Wassergehalt zwischen 5 Gew.% und 40 Gew.%.

10. Zusammensetzung nach einem der vorstehenden Ansprüche,
**gekennzeichnet durch** einen Gehalt an wenigstens einem organischen Bindemittel ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkydpolymeren, Polyvinylalkohol und deren Mischungen umfasst, wbei Homopolymere oder Copolymere von Acrylsäure und/oder Methacrylsäure bevorzugt sind.

11. Zusammensetzung nach einem der vorstehenden Ansprüche,
**gekennzeichnet durch** einen Gehalt an wenigstens einem Füllstoff oder Pigment, ausgewählt aus der Gruppe, die pyrogen gefällte Kieselsäure, gefällte Kieselsäure, Silizium-Aluminium-Mischoxide, Carbonate, z.B. Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst wobei Titandioxid, Silikate und Carbonate bevorzugt sind.

12. Zusammensetzung nach einem der vorstehenden Ansprüche,
**gekennzeichnet durch** einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

13. Zusammensetzung nach einem der vorstehenden Ansprüche,
**dadurch gekennzeichnet, dass** die Zusammensetzung ein Putz, eine Farbe, insbesondere eine Dispersionsfarbe, oder eine dekorative Endbeschichtung ist.

## Claims

1. A composition which is stable upon storage, for the formation of coatings on buildings,
comprising at least one organic binder, at least one filler and/or pigment, water for producing a pasty consistency in the composition, a buffer system for setting and maintaining a pH of at least 10, as well as conventional additives if appropriate,
**characterized by** a content of a buffer system based on at least one organic amino compound, wherein the content corresponds to between 0.01 % by weight and 20 % by weight of amino compound, respectively with respect to the total weight of the composition, wherein at least one pKₐ value for the acid of the buffer system is between 10 and 13.5.

2. The composition as claimed in claim 1, in which the content is measured in a manner such that it is sufficient to set and maintain a pH of at least 10 in the composition over at least 30 days, preferably 60 days, more preferably 90 days, yet more preferably 180 days, particularly preferably 360 days and yet more preferably 720 days.

3. The composition as claimed in claim 1 or claim 2,
**characterized in that** the amino compound content is between 0.1 % by weight and 15 % by weight, preferably between 0.2 % by weight and 10 % by weight.

4. The composition as claimed in one of claims 1 to 3, **characterized in that** the buffer system contains at least one ampholytic organic amino compound, preferably selected from the group which comprises amino acids, aminophenols, amino alcohols and amino sugars.

5. The composition as claimed in claim 4,
**characterized in that** the buffer system comprises an amino compound which is selected from arginine, proline, lysine, p-aminophenol and glucosamine as well as mixtures thereof.

6. The composition as claimed in one of the preceding claims,
**characterized by** a pH of at least 10.5, preferably at least 11, particularly preferably between 12 and 14, over at least 30 days, preferably at least 60 days.

7. The composition as claimed in one of the preceding claims,
**characterized by** a content of at least one organic binder of between 1 % by weight and 40 % by weight, preferably between 2 % by weight and 30 % by weight, particularly preferably between 2.5 % by weight and 25 % by weight, respectively with respect to the solid material.

8. The composition as claimed in one of the preceding claims,
**characterized by** a content of at least one filler and/or pigment of between 10 % by weight and 90 % by weight, preferably between 20 % by weight and 85 % by weight, particularly preferably between 25 % by weight and 80 % by weight.

9. The composition as claimed in one of the preceding claims,
**characterized by** a water content of between 5 % by weight and 40 % by weight.

10. The composition as claimed in one of the preceding claims,
**characterized by** a content of at least one organic binder selected from the group which comprises homopolymers, copolymers or terpolymers of acrylic acid and/or methacrylic acid, itaconic acid as well as acid esters such as ethyl acrylate, butyl acrylate; styrene, substituted or unsubstituted vinyl chloride, vinyl acetate, acrylamides and acrylonitrile; water-thinnable alkyd polymers, combinations of (meth)acrylic/alkyd polymers, polyvinyl alcohol and mixtures thereof, wherein homopolymers or copolymers of acrylic acid and/or methacrylic acid are preferred.

11. The composition as claimed in one of the preceding claims,
**characterized by** a content of at least one filler or pigment selected from the group which comprises pyrogenically precipitated silica, precipitated silica, silicon-aluminium mixed oxides, carbonates, for example alkaline earth carbonates such as calcium carbonate, silicon dioxide, silicates, for example aluminosilicates, sulphates, for example barium sulphates, titanium dioxide, Bunt's pigments, for example iron oxides, bismuth vanadates or mixtures thereof, wherein titanium dioxide, silicates and carbonates are preferred.

12. The composition as claimed in one of the preceding claims,
**characterized by** a content of at least one additive such as, for example, a rheological additive, a defoaming agent, a water-repellent agent, fibres, a film-forming agent and a dispersing agent.

13. The composition as claimed in one of the preceding claims,
**characterized in that** the composition is a render, a paint, in particular an emulsion paint, or a decorative finishing coat.

## Revendications

1. Composition stable au stockage, destinée à créer des revêtements sur des bâtiments,
comprenant au moins un agent liant organique, au moins un agent de charge et / ou un pigment, de l'eau destinée à régler une consistance pâteuse de la composition, un système tampon, destiné à régler et à maintenir une valeur pH d'au moins 10, ainsi que le cas échéant des additifs usuels,
**caractérisée par** une teneur en un système tampon sur la base d'au moins un composé amino organique, la teneur correspondant à entre 0,01 % en poids et 20 % en poids de composé amino, chaque fois rapportés au poids total de la composition, au moins une valeur pK de l'acidité du système tampon se situant entre 10 et 13,5.

2. Composition selon la revendication 1, dans laquelle la teneur est dimensionnée de sorte à suffire pour le réglage d'un maintien d'une valeur pH d'au moins 10 de la composition sur au moins 30 jours, de préférence 60 jours, de manière plus préférentielle 90 jours, de manière encore plus préférentielle 180 jours, de manière spécialement préférentielle 360 jours et de manière encore plus spécialement préférentielle 720 jours.

3. Composition selon la revendication 1 ou 2,
**caractérisée en ce que** la teneur en composé amino se situe entre 0,1 % en poids et 15 % en poids, de préférence entre 0,2 % en poids et 10 % en poids.

4. Composition selon l'une quelconque des revendications 1 à 3,
**caractérisée en ce que** le système tampon contient au moins un composé amino organique ampholytique, sélectionné de préférence dans le groupe comprenant les acides aminés, les aminophénols, les aminoalcools et le sucre aminé.

5. Composition selon la revendication 4,
**caractérisée en ce que** le système tampon comprend un composé amino qui est sélectionné parmi l'arginine, la proline, la lysine, le p-aminophénol et la glucosamine, ainsi que leurs mélanges.

6. Composition selon l'une quelconque des revendications précédentes,
**caractérisée par** une valeur pH d'au moins 10,5, de préférence d'au moins 11, de manière particulièrement préférentielle, comprise entre 12 et 14 sur au moins 30 jours, de préférence au moins 60 jours.

7. Composition selon l'une quelconque des revendications précédentes,
**caractérisée par** une teneur en au moins un agent liant organique comprise entre 1 % en poids et 40 % en poids, de préférence entre 2 % en poids et 30 % en poids, de manière particulièrement préférentielle, entre 2,5 % en poids et 25 % en poids, chaque fois calculés en tant que substance solide.

8. Composition selon l'une quelconque des revendications précédentes,
**caractérisée par** une teneur en au moins un agent de charge et / ou pigment comprise entre 10 % en poids et 90 % en poids, de préférence entre 20 % en poids et 85 % en poids, de manière particulièrement préférentielle, entre 25 % en poids et 80 % en poids.

9. Composition selon l'une quelconque des revendications précédentes,
**caractérisée par** une teneur en eau comprise entre 5 % en poids et 40 % en poids.

10. Composition selon l'une quelconque des revendications précédentes,
**caractérisée par** une teneur en au moins un agent liant organique sélectionné dans le groupe comprenant les homopolymères, les copolymères ou les terpolymères de l'acide acrylique et / ou de l'acide méthacrylique, l'acide itaconique, ainsi que des esters d'acide comme l'acrylate d'éthyle, l'acrylate de butyle, le styrène, un chlorure de vinyle, acétate de vinyle, acrylamide et acrylonitrile substitué ou non substitué ; des polymères alkydes diluables dans l'eau, des associations de polymères (méth)acryles / alkydes), un alcool polyvinylique et leurs mélanges, des homopolymères ou des copolymères de l'acide acrylique et / ou de l'acide méthacrylique étant préconisés.

11. Composition selon l'une quelconque des revendications précédentes,
**caractérisée par** une teneur en au moins un agent de charge ou pigment, sélectionné dans le groupe comprenant l'acide silicique précipité par pyrogénation, l'acide silicique précipité, les oxydes mixtes de silicium - aluminium, les carbonates, par exemple les carbonates alcalino-terreux tels que la carbonate de calcium, le dioxyde de silicium, les silicates, par exemple les aluminosilicates, les sulfates, par exemple les sulfates de baryum, le dioxyde de titane, les pigments colorés, par exemple les oxydes de fer, les vanadates de bismuth, ou leurs mélanges, le dioxyde de titane, les silicates et les carbonates étant préconisés.

12. Composition selon l'une quelconque des revendications précédentes,
**caractérisée par** une teneur en au moins un additif, tel que par exemple un additif de rhéologie, un agent antimousse, un agent hydrophobant, des fibres, un agent auxiliaire filmogène et un agent de dispersion.

13. Composition selon l'une quelconque des revendications précédentes,
**caractérisée en ce que** la composition est un crépi, une peinture, notamment une peinture à dispersion ou un revêtement de finition décoratif.
